# EUROPÄISCHE PATENTSCHRIFT

(11) **EP 0 696 554 B1**
(45) Veröffentlichungstag und Bekanntmachung des Hinweises auf die Patenterteilung: **21.05.1997**
(21) Anmeldenummer: 95110547.7
(22) Anmeldetag: 06.07.1995
(51) Int. Cl.: C03C 4/02, C03C 4/00, C03C 1/10, C03C 3/091

(54) **Gefärbtes Borosilikatglas und dessen Verwendung**
Colored borosilicate glass and its use
Verre borosilicate coloré et son application

(30) Priorität: 10.08.1994 DE 4428235
(43) Veröffentlichungstag der Anmeldung: 14.02.1996
(73) Patentinhaber: JENAer GLASWERK GmbH, D-07745 Jena (DE)
(72) Erfinder: Watzke, Eckhart, D-07749 Jena (DE); Kämpfer, Andrea, D-07745 Jena (DE); Kloss, Thomas, D-07743 Jena (DE); Kemmler, Gerhard, D-07747 Jena (DE)

(56) Entgegenhaltungen:
- EP-A- 0 510 542
- US-A- 1 830 902
- CHEMICAL ABSTRACTS, vol. 116, no. 2, 13.Januar 1992 Columbus, Ohio, US; abstract no. 10309k, Seite 232;
- CHEMICAL ABSTRACTS, vol. 119, no. 8, 23.August 1993 Columbus, Ohio, US; abstract no. 78121k, H.J. POHL 'absorption mechanisms of real glasses in the uv-region, the deep uv region with new optical glasses, and...' Seite 367;
- CHEMICAL ABSTRACTS, vol. 104, no. 16, 21.April 1986 Columbus, Ohio, US; abstract no. 134720, Seite 297;
- DATABASE WPI Week 07 Derwent Publications Ltd., London, GB; AN 84-040298 & JP-A-59 003 043 (SHOEI KOGYO YG) , 9.Januar 1984
- DATABASE WPI Week 36 Derwent Publications Ltd., London, GB; AN 86-234733 & JP-A-61 163 139 (KAMAYA CHEM IND KK) , 23.Juli 1986

## Beschreibung

Die Erfindung hat ein gefärbtes Borosilikatglas, mit einer bis zur völligen Undurchlässigkeit abstufbaren Transmission im "Nahen Infrarot"-Bereich (NIR), der Synthese-Zusammensetzung (in Ma.-% auf Oxidbasis) von SiO₂ > 78; B₂O₃ > 8; Al₂O₃ 1,5 - 3,5 und Alkalioxiden > 2, zum Gegenstand.

Die Gläser sind auf Grund ihrer Absorptions/Transmissionscharakteristik insbesondere als Filter zu verwenden, oder, wenn die Lichtdurchlässigkeit im NIR/IR gering genug ist, als Absorber in der Solartechnik zu nutzen.

Es ist bekannt, Borosilikatglas durch Zusatz bestimmter Komponenten in unterschiedlicher Weise zu färben. Wenn man ein in seinen Eigenschaften standardisiertes Glas intensiv einfärbt, tritt jedoch oftmals der Nachteil auf, daß sich bei relativ großen Zusätzen von färbenden Oxiden wie z. B. Kupfer-, Kobalt-, Nickel-, oder Manganoxid, wichtige Eigenschaften, wie beispielsweise die Ausdehnung, die hydrolytische Beständigkeit oder die Viskositätscharakteristik in unzulässig großem Maße ändern.

Es ist fernerhin nicht bekannt, daß mit den aufgeführten Farboxiden abgestufte NIR-Transmissionen eingestellt werden können bzw. so für Sonnenlicht völlig undurchlässiges Glas herzustellen.

Aufgabe der Erfindung ist es, Borosilikatgläser, vorrangig das international festgelegte "Borosilicatglas 3.3" - bräunlich, braun bis schwarz zu färben, ohne die gemäß DIN/ISO 3585 standardisierten Eigenschaften in unzulässigem Maße zu verändern.

Diese Aufgabe wird gelöst, wenn die o. g. Borosilikatglas-Synthese-Zusammensetzung zwischen 0,5 - 2.0 Ma.-% Titancarbid und zwischen 0.05 -0,5 Ma.-% metallisches Silicium enthält.

So ist es nach der Erfindung möglich, hochkieselsäurereiches, alkalioxidarmes Borosilikatglas mit Titancarbid und/oder metallischem Silicium bräunlich, braun bis schwarz zu erschmelzen.

Bei Verwendung von 0,5 Gew.-% bis 2.0 Gew.-% TiC und 0,05 Gew.-% bis 0,5 Gew.-% Si° kann die Glasfarbe abgestuft bräunlich bis schwarz eingestellt werden und gleichzeitig die NIR-Transmission bis ca. 3,5 µm stufenweise verringert werden.
Dabei wird die bekannte Wasserbande bei ca. 2,75 µm bis zu Zusätzen von ca. 1 % TiC verringert und bei größerer TiC-Zusätzen verstärkt, bzw. wird ein veränderter Farbmechanismus wirksam.

Die wichtigsten Glaseigenschaften werden nicht verändert, da das metallische Silicium als Siliciumoxid und das Titan des Titancarbids als Titanoxid im Glasnetzwerk eingebaut werden.

Der zusätzlich geringe Anteil Siliciumoxid wirkt nicht störend und die relativ große Menge von Titanoxid stört ebenfalls nicht, da diese Komponente eine ähnliche Wirkung wie SiO₂ auf die Glaseigenschaften wie z.B. die Ausdehnung hat.

Bevorzugte Synthese-Zusammensetzungen nach der Erfindung sind gegeben, wenn zu (in Ma.-% auf Oxidbasis) 79-81 SiO₂, 12-13 B₂O₃, 2-3 Al₂O₃, 3-4,5 Na₂O, 0,5-1,0 K₂O 0,05-0,5 Si(met.) und 0,5-2,0 TiC zugemischt werden.

Im folgenden wird die Erfindung näher erläutert:

Das "Borosilicatglas 3.3" wird unter verschiedenen Warenzeichen - wie z.B. Duran, Pyrex, Rasotherm oder Simax - gehandelt und hat eine chemische Zusammensetzung, die im Bereich von in Ma.-% SiO₂ 80-81 %, B₂O₃ 12-13 %, Al₂O₃ 2-3 % und Na₂O+K₂O 4-5 % liegt. Für Duran^{R} wird vom Hersteller gemäß Laborglas-Katalog Nr. 50020/1991 folgende Zusammensetzung (in Gew.-%) angegeben: SiO₂ 81%, B₂O₃ 13%, Al₂O₃ 2%, Na₂O+K₂O 4%.

Als Grundglas wurde folgende Glaszusammensetzung in Ma.-% gewählt: SiO₂ 80 %, B₂O₃ 13 %, Al₂O₃ 2 %, Na₂O 4 %, und K₂O 1 %. Dem Grundglas wurde die praxisrelevante Menge von 400 ppm Fe₂O₃ als Verunreinigung zugesetzt.

Als Rohstoffe wurden Quarzsand, Borsäure, Aluminiumhydroxid, Natrium- und Kaliumkarbonat und als Läutermittel Natriumchlorid (1 % Na₂O als NaCl) verwendet.

Die Schmelzen wurden im Laborofen in Quarztiegeln (V = 1 Liter) bei Schmelztemperaturen von 1620 °C bis 1650 °C in herkömmlicher Weise an Luftatmosphäre durchgeführt. Die Schmelzzeit betrug ca. 5 Stunden. Die Schmelzen wurden homogenisiert.

Wenn man das gemäß dem Stand der Technik. z. B. mit 0,2 Ma.-% Kohlenstoff-Zusatz (1,0 Ma.-% TiC entspricht etwa 0,2 Ma.-% C), zugesetzt als Zucker, erschmilzt, wird die Braunfärbung des Glases nicht beobachtet.

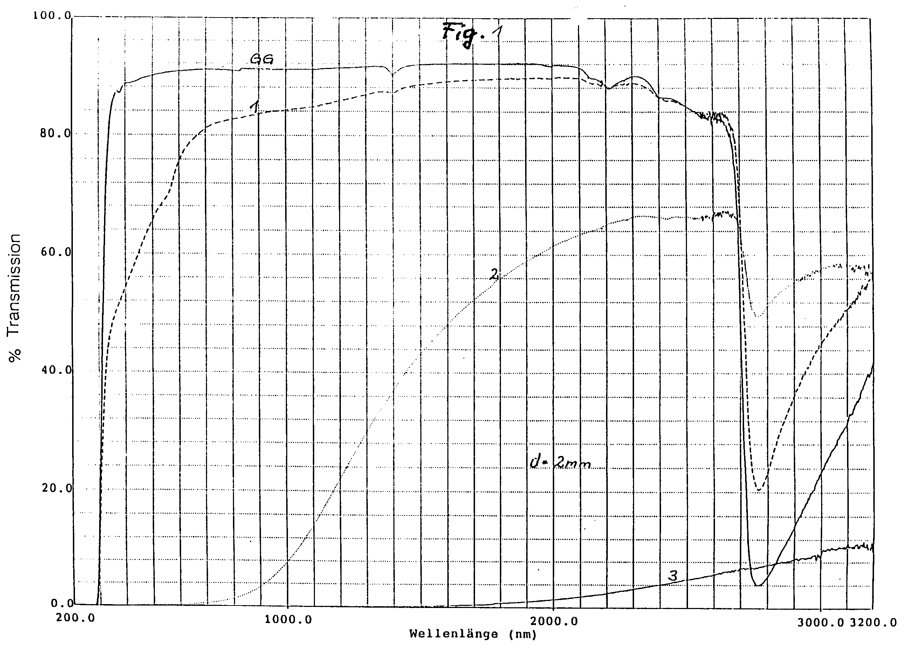

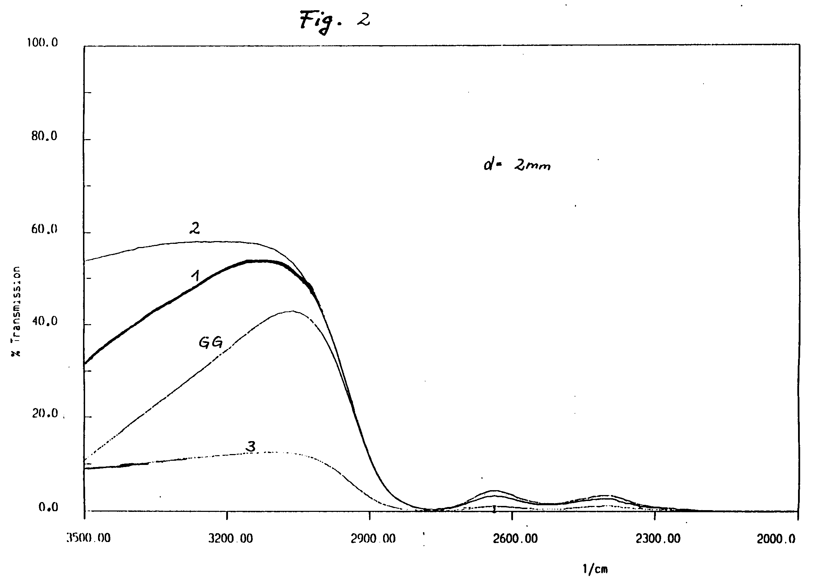

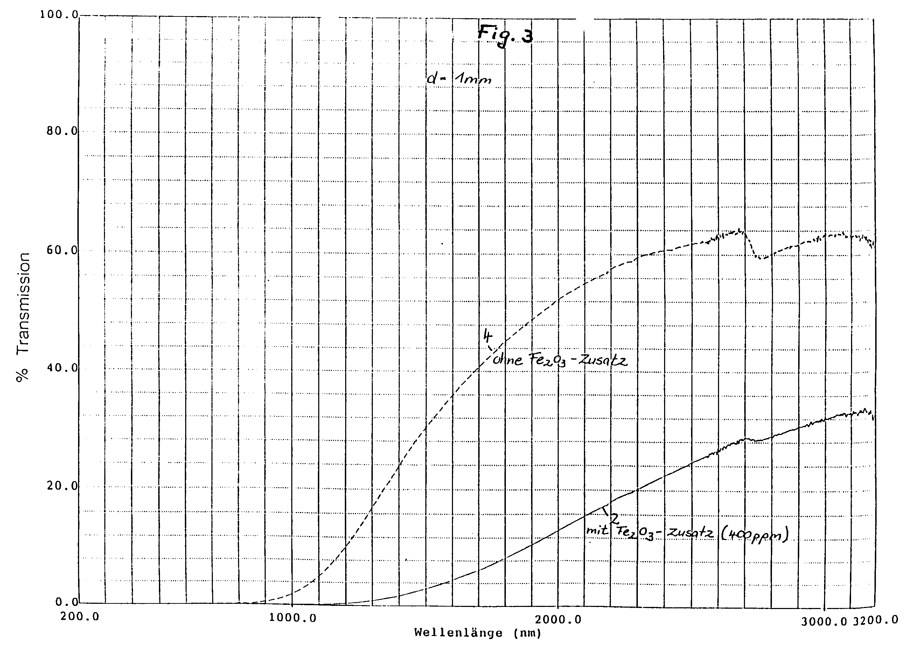

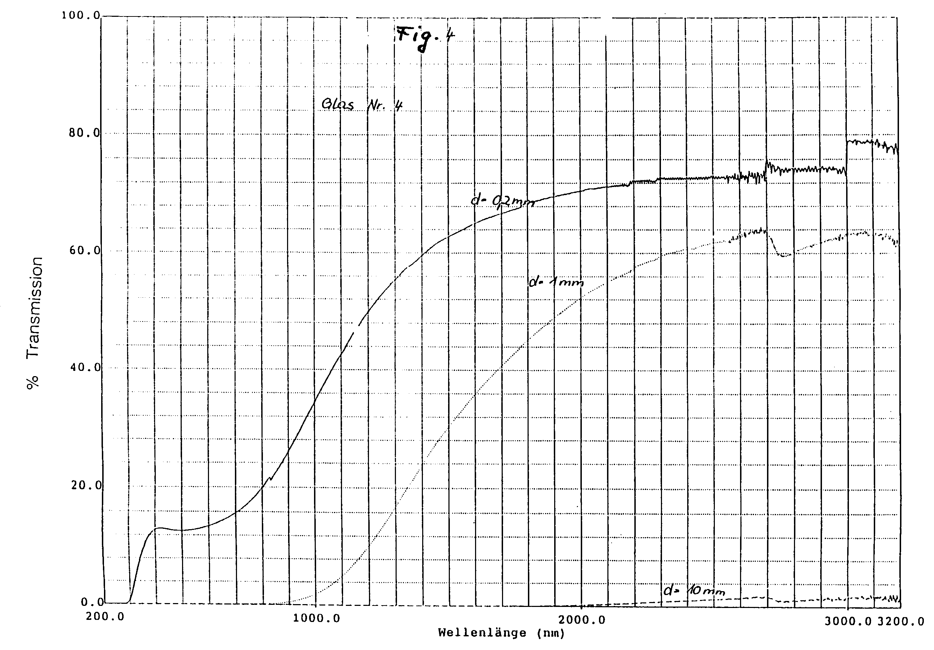

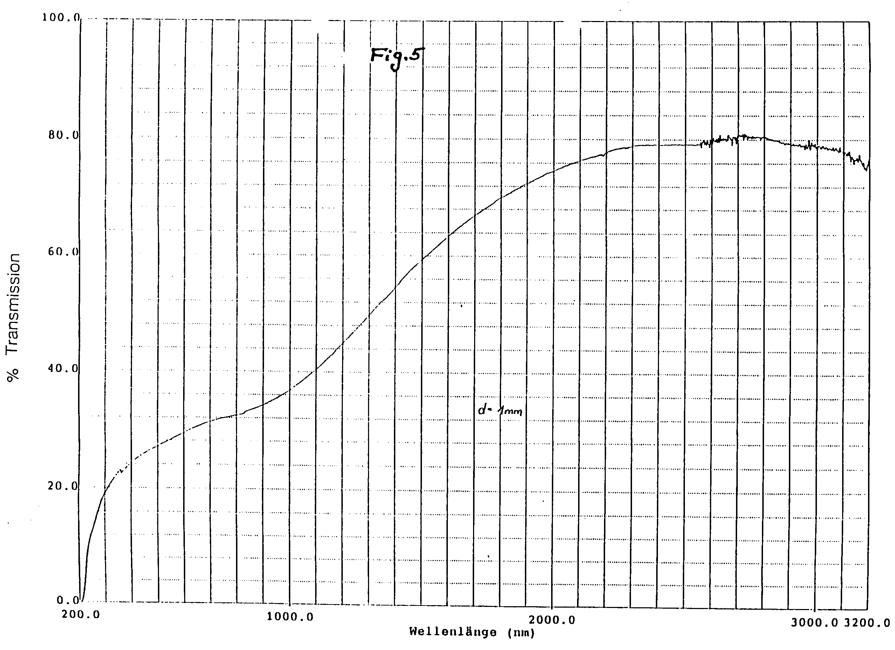

## Patentansprüche

1. Gefärbtes Borosilikatglas, mit einer bis zur völligen Undurchlässigkeit abstufbaren Transmission im NIR-Bereich der Synthese-Zusammensetzung (in Ma.-% auf Oxidbasis) SiO₂ > 78; B₂O₃ > 8; Al₂O₃ 1,5 - 3,5; Alkalioxide > 2,
**dadurch gekennzeichnet,**
daß die Glassynthese-Zusammensetzung 0,5 - 2.0 Ma.-% Titancarbid (TiC) und 0,05 - 0,5 Ma.-% Silicium (metallisch) enthält.

2. Gefärbtes Borosilikatglas nach Anspruch 1,
gekennzeichnet durch die Synthese-Zusammensetzung (in Ma.-% auf Oxidbasis):
| | |
|---|---|
| SiO₂ | 79 - 81 |
| B₂O₃ | 12 - 13 |
| Al₂O₃ | 2 - 3 |
| Na₂O | 3 - 4,5 |
| K₂O | 0,5 - 1,0 |
| Si(met.) | 0,05 - 0,5 |
| TiC | 0,5 - 2,0 |

3. Verwendung eines von bräunlich, braun bis schwarz gefärbten. Borosilikatglases nach den Ansprüchen 1 oder 2,
als Filterglas, als Absorber für Sonnenlicht, als Behälterglas und/oder als ästhetisches Farbglas im Bau- und Dekorationsbereich.

## Claims

1. Coloured borosilicate glass with a transmission in the NIR range that can be graduated as far as complete opacity, having the synthesis composition (in mass % based on oxide) of SiO₂ > 78; B₂O₃ > 8; Al₂O₃ 1.5 - 3.5; alkali oxides > 2,
characterised in that
the glass synthesis composition contains 0.5 - 2.0 mass % of titanium carbide (TiC) and 0.05 - 0.5 mass % of silicon (metallic).

2. Coloured borosilicate glass according to claim 1,
characterised by the synthesis composition (in mass % based on oxide):
| | |
|---|---|
| SiO₂ | 79 - 81 |
| B₂O₃ | 12 - 13 |
| Al₂O₃ | 2 - 3 |
| Na₂O | 3 - 4.5 |
| K₂O | 0.5 - 1.0 |
| Si(met.) | 0.05 - 0.5 |
| TiC | 0.5 - 2.0 |

3. The use of a coloured borosilicate glass ranging from brownish, brown to black according to claim 1 or 2,
as filter glass, a sunlight absorber, container glass and/or as aesthetic coloured glass in the construction and decorative sector.

## Revendications

1. Verre borosilicaté coloré doté d'une transmission dans le domaine infrarouge proche réglable jusqu'à l'opacité complète et ayant pour composition de synthèse (en % de matière par rapport aux oxydes) SiO₂ > 78; B₂O₃ > 8; Al₂O₃ 1,5 ― 3,5; oxydes alcalins > 2,
caractérisé par le fait que la composition de synthèse du verre comprend 0,5 ― 2,0 % de matière de carbure de titane (TiC) et 0,05 - 0,57 % de matière de silicium métallique.

2. Verte borosilicaté coloré selon la revendication 1, caractérisé par la composition de synthèse (en % de matière par rapport aux oxydes)
| | |
|---|---|
| SiO₂ | 79 - 81 |
| B₂O₃ | 12 - 13 |
| Al₂O₃ | 2 - 3 |
| Na₂O | 3 - 4,5 |
| K₂O | 0,5 - 1 |
| Si(métal.) | 0,05 - 0,5 |
| TiC | 0,5 - 2 |

3. Utilisation d'un verte borosilicaté coloré, de couleur brunâtre, brune jusqu'à noire, selon les revendications 1 ou 2, comme verre à filtres, comme absorbeur dans les techniques solaires, comme verre pour récipients et/ou comme verre coloré esthétique dans le domaine de la construction et de la décoration.
